# EUROPÄISCHE PATENTSCHRIFT

(11) **EP 2 354 532 B1**
(45) Veröffentlichungstag und Bekanntmachung des Hinweises auf die Patenterteilung: **03.01.2018**
(21) Anmeldenummer: 10151793.6
(22) Anmeldetag: 27.01.2010
(51) Int. Cl.: F02N 11/08, H02J 1/00, H02M 3/04

(54) **Parallel-Schalteranordnung**
Parallel switch assembly
Circuit parallèle de commutateurs

(43) Veröffentlichungstag der Anmeldung: 10.08.2011
(73) Patentinhaber: Flex Automotive GmbH, 70794 Filderstadt (DE)
(72) Erfinder: Kanamüller, Thomas, 73732 Esslingen (DE); Tiritoglu, Okan, 70174 Stuttgart (DE); Gern, Tobias, 72622 Nürtingen (DE)
(74) Vertreter: Rupprecht, Kay

(56) Entgegenhaltungen:
- EP-A2- 2 172 644
- DE-A1-102004 061 290
- DE-A1-102006 034 837
- DE-A1-102008 001 332

## Beschreibung

Die Erfindung betrifft eine Parallel-Schalteranordnung zur Verwendung mit einem Start-Stopp-System eines Kraftfahrzeugs gemäß dem Oberbegriff des Anspruchs 1 und ein Verfahren zum Schalten einer Parallel-Schalteranordnung gemäß dem Oberbegriff des Anspruchs 6. Zusätzlich wird eine Verwendung einer erfindungsgemäßen Parallel-Schalteranordnung mit einem Start-Stopp-System als Beispiel beschrieben.

Parallel-Schalteranordnungen der hier angesprochenen Art sind bekannt. Sie weisen mehrere parallel geschaltete Schalter auf, die in einer Stromversorgungsleitung zwischen einer Energiequelle, insbesondere einer Spannungsquelle und wenigstens einer Last angeordnet sind. Derartige Parallel-Schalteranordnungen nehmen abwechselnd einen Stabilisierungsbetriebszustand und einen Normalbetriebszustand ein, in denen die Schalter jeweils entgegengesetzte Schaltzustände aufweisen.

In der DE 10 2005 017 295 A1 wird beispielsweise durch eine Parallel-Schalteranordnung ein Motor zum Antrieb einer Pumpe gesteuert, wobei die Pumpe im Bedarfsfall Bremsflüssigkeit von einem Hauptausgleichsbehälter ansaugt und einem Druckspeicher zur Betätigung einer Bremskraftverstärkungsanlage zuführt. In einem Stabilisierungsbetriebszustand, in dem der Motor zum Antrieb der Pumpe mit einem Strom versorgt werden soll, sind die Schalter folglich geschlossen. Hingegen sind die Schalter in einem Normalbetriebszustand der Parallel-Schalteranordnung geöffnet, wenn die Pumpe nicht angetrieben werden soll. Der Einsatz von mehreren parallel geschalteten Schaltern ist besonders vorteilhaft, da durch die Redundanz Betriebsausfälle einzelner Schalter ausgeglichen werden können.

Parallel-Schalteranordnungen der hier angesprochenen Art können auch für Start-Stopp-Systeme in Kraftfahrzeugen eingesetzt werden. Die Funktionsweise von Start-Stopp-Systemen wird im Stand der Technik vielfach beschrieben, so dass hier nicht näher darauf eingegangen werden soll. Ein Phänomen eines normalen Startvorgangs ist die hohe Leistung, die der Anlasser benötigt. Dadurch kann die Spannung im Bordnetz während des Motorstarts von den üblichen 12 V auf bis zu 6 V einbrechen. Wenn der Motor nach dem Stopp wieder startet, kommt es beispielsweise bei Audio- und Navigationssystemen durch den kurzfristigen Spannungseinbruch typischerweise zu einem Neustart dieser Geräte. Insbesondere bei Start-Stopp-Systemen, die gerade ein geräuschloses und von den Insassen eines Kraftfahrzeugs unbemerktes Stoppen und Starten des Motors gewährleisten sollen, ist ein derartiger Spannungseinbruch inakzeptabel.

In der DE 10 2008 001 332 A1 wird eine Starteinrichtung für eine Brennkraftmaschine offenbart, die einen Startermotor, eine Einrückvorrichtung mit einem Stellglied sowie ein Steuermodul umfasst. Das Steuermodul steuert eine erste und eine zweite Endstufe an, wobei die zweite Endstufe eine Mehrzahl von Schaltmitteln aufweist, durch deren Ansteuerung dem Startermotor unterschiedliche Stromstärken zuführbar sind.

DE 10 2006 034 837 A1 offenbart einen Maschinenanlasser mit einer Schalter-Schaltung, wobei der Maschinenanlasser dazu befähigt ist, einen Ein-AusSchaltvorgang mittels der Schalter-Schaltung durchzuführen.

Aus der DE 10 2004 061 290 A1 ist ein Maschinen-Startsystem mit einer Motorsteuereinrichtung bekannt.

Um die genannten Probleme während des Startvorgangs zu vermeiden, ist in bekannten Start-Stopp-Systemen von Kraftfahrzeugen ein Gleichstromwandler, im Folgenden DC/DC-Wandler genannt, vorgesehen, der während des Startvorgangs die Stromführung übernimmt und eine größere Ausgangsspannung als die Eingangsspannung bereitstellt, so dass auf eine zusätzliche Spannungsquelle verzichtet werden kann. Hierzu ist der DC/DC-Wandler vorzugsweise als Aufwärtswandler, auch Step-Up-Konverter genannt, ausgebildet und parallel zu der Parallel-Schalteranordnung geschaltet. Im Falle eines Startvorgangs werden die Schalter der Parallel-Schalteranordnung geöffnet, so dass ein Stromfluss ausschließlich über den DC/DC-Wandler erfolgt, der daraufhin die Spannung für Teile des elektrischen Bordnetzes stabilisiert. Wenn der Startvorgang beendet ist, werden die Schalter geschlossen, so dass eine Stromführung über die Schalter erfolgt und der DC/DC-Wandler entlastet wird. Durch das häufige periodische Öffnen und Schließen der Schalter, insbesondere Relais der Parallel-Schalteranordnung bei jedem Start- und Stopp-Vorgang unterliegen diese einem besonders hohen elektrischen und mechanischen Verschleiß, so dass einerseits ihre maximale Schaltzyklenanzahl begrenzt ist und die Parallel-Schalteranordnung darüber hinaus besonders wartungsintensiv ist. Weiterhin sind die bekannten Parallel-Schalteranordnung fehleranfällig, wodurch es zu einer Überbelastung des parallel geschalteten DC/DC-Wandlers kommen kann.

Aufgabe der vorliegenden Erfindung ist es daher, eine sichere Parallel-Schalter-anordnung zu schaffen, die eine hohe maximale Schaltzyklenanzahl aufweist und deren Funktionsfähigkeit einfach überprüfbar ist sowie ein entsprechendes Verfahren zur Lösung dieser Aufgabe.

Zur Lösung dieser Aufgabe wird eine Parallel-Schalteranordnung mit den Merkmalen des Anspruchs 1 vorgeschlagen. Die Parallel-Schalteranordnung ist für die Verwendung mit einem Start-Stopp-System eines Kraftfahrzeugs vorgesehen und weist mehrere parallel geschaltete Schalter auf, bei denen es sich um Relais handelt. Die Schalter sind in einer Stromversorgungsleitung zwischen einer Energiequelle, insbesondere einer Spannungsquelle und wenigstens einer Last angeordnet. Die Parallel-Schalteranordnung weist zwei Betriebszustände auf, die abwechselnd eingenommen werden, nämlich einen Stabilisierungsbetriebszustand und einen Normalbetriebszustand. In den beiden Betriebszuständen weisen die parallel geschalteten Schalter entgegengesetzte Schaltzustände auf. Die Schalter sind bei einer Verwendung der Parallel-Schalteranordnung in einem Start-Stopp-System in dem Stabilisierungsbetriebszustand der Parallel-Schalteranordnung geöffnet, während sie in dem Normalbetriebszustand der Parallel-Schalteranordnung geschlossen sind. In dem Normalbetriebszustand befindet sich die Parallel-Schalter-anordnung also quasi in einem Bypassbetrieb. Die Parallel-Schalteranordnung zeichnet sich dadurch aus, dass die Schalter bei einem Öffnungsvorgang und/oder bei einem Schließvorgang eines Schaltzyklus eine zeitversetzte Schaltfolge aufweisen und sich die Schaltfolge der Schalter nach ein oder mehreren Schaltzyklen ändert.

Vorzugsweise ist vorgesehen, dass sich die Schaltfolge nach jedem Schaltzyklus ändert. Durch diese vorteilhafte Ausgestaltung der Parallel-Schalteranordnung ist es möglich, dass beide Schalter gleich belastet werden, so dass eine einseitige Belastung und ein Verschleiß einzelner Schalter reduziert werden. Außerdem ist durch die Ausgestaltung der Parallel-Schalteranordnung gemäß der Erfindung etwa die doppelte maximale Schaltzyklenanzahl im Vergleich zu herkömmlichen Parallel-Schalteranordnungen erreichbar. Weiterhin können die Schalter dadurch kleinere Bauformen aufweisen, so dass auch Schaltgeräusche reduziert werden. Ferner kann eine Funktionsüberprüfung einzelner Schalter besonders vorteilhaft durchgeführt werden.

Besonders bevorzugt wird eine Parallel-Schalteranordnung, die sich dadurch auszeichnet, dass ein DC/DC-Wandler, insbesondere einen Aufwärtswandler, parallel zu den mehreren Schaltern geschaltet ist. Dadurch lässt sich in vorteilhafter Weise eine Parallel-Schalteranordnung für ein Start-Stopp-System realisieren, wobei der DC/DC-Wandler für eine Stabilisierung der Bordnetzspannung bei einem Startvorgang sorgt. Bei einer Verwendung der Parallel-Schalteranordnung für ein Start-Stopp-System sind die Schalter in dem Normalbetriebszustand bzw. Bypassbetrieb der Parallel-Schalter-anordnung vorzugsweise geschlossen, so dass der Strom über die Schalter fließt und in einem Stabilisierungsbetriebszustand der Parallel-Schalteranordnung geöffnet, so dass ein Stromfluss ausschließlich über den DC/DC-Wandler erfolgt.

Weiterhin bevorzugt wird auch eine Parallel-Schalteranordnung, die sich dadurch auszeichnet, dass eine Fehlererkennungseinrichtung vorgesehen ist, die vorzugsweise während jedem Schaltzyklus die Funktionsfähigkeit wenigstens eines Schalters überprüft. Durch die zeitversetzte Schaltfolge der Schalter der Parallel-Schalteranordnung ist es in vorteilhafter Weise möglich, die Funktionsfähigkeit einzelner Schalter zu überprüfen. Dadurch, dass sich die Schaltfolge nach jedem Schaltzyklus ändert, kann darüber hinaus in jedem Schaltzyklus ein anderer Schalter überprüft werden, so dass jeder Schalter sukzessive auf seine Funktionsfähigkeit hin überprüft wird. Durch die Fehlererkennungseinrichtung kann also ein Ausfall eines Schalters festgestellt werden, so dass eine Überbelastung des DC/DC-Wandlers rechtzeitig vermieden werden kann. Außerdem wird dadurch eine Brandgefahr vermindert, die sich durch eine Überbelastung des DC/DC-Wandlers ergeben kann.

Zur Lösung der oben genannten Aufgabe wird außerdem ein Verfahren zum Schalten einer Parallel-Schalteranordnung mit den Merkmalen des Anspruchs 6 vorgeschlagen. Die Parallel-Schalteranordnung weist mehrere parallel geschaltete Schalter auf, die in einer Stromversorgungsleitung zwischen einer Energiequelle, insbesondere einer Spannungsquelle und wenigstens einer Last angeordnet sind, wobei die Parallel-Schalteranordnung abwechselnd einen Stabilisierungsbetriebszustand und einen Normalbetriebszustand einnimmt, in denen die Schalter entgegengesetzte Schaltzustände aufweisen. Das Verfahren zeichnet sich dadurch aus, dass die Schalter bei einem Öffnungsvorgang und/oder bei einem Schließvorgang eines Schaltzyklus zeitversetzt geschaltet werden und die Schaltfolge der Schalter nach ein oder mehreren Schaltzyklen, vorzugsweise jedoch nach jedem Schaltzyklus verändert wird. Durch das Verfahren der hier vorgeschlagenen Art ist es in vorteilhafter Weise möglich, ca. die doppelte maximale Schaltzyklenanzahl zu erreichen, da die Schalter gleichmäßig belastet werden und dadurch ein Verschleiß der Schalter vermindert wird.

Weiterhin bevorzugt wird ein Verfahren, welches sich dadurch auszeichnet, dass während eines Öffnungs- und/oder Schließvorgangs eines Schaltzyklus die Funktionsfähigkeit wenigstens eines Schalters durch eine Fehlererkennungseinrichtung überprüft wird. Durch die zeitversetzte Schaltfolge der Schalter der Parallel-Schalteranordnung ist bei einem Öffnungsvorgang und einem Schließvorgang jeweils ein Schalter geschlossen, während alle übrigen Schalter geöffnet sind. Dadurch ist es während eines Übergangs von einem Betriebszustand in den anderen möglich, eine Überprüfung wenigstens eines Schalters durchzuführen. Vorzugsweise findet bei jedem Übergang eines Schaltzyklus, also bei jedem Öffnungs- und Schließvorgang der Schalter eine Überprüfung eines Schalters durch die Fehlererkennungseinrichtung statt.

Schließlich wird ein Verfahren bevorzugt, bei dem in dem Stabilisierungsbetriebszustand der Parallel-Schalteranordnung eine Stromführung ausschließlich über einem DC/DC-Wandler, insbesondere über einen Aufwärtswandler erfolgt, der zu den Schaltern parallel geschaltet ist. Auf diese Weise kann in dem Falle eines Startvorgangs eine Stromversorgung ausschließlich über den Aufwärtswandler erfolgen, so dass eine Bordnetzstabilisierung erfolgen kann. Vorzugsweise misst die Fehlererkennungseinrichtung einen Spannungsabfall an dem DC/DC-Wandler, um festzustellen, ob ein Schalter defekt ist.

Zusätzlich wird auch eine Verwendung einer erfindungsgemäßen Parallel-Schalteranordnung mit einem Start-Stopp-System als Beispiel beschrieben.

Die Erfindung wird im Folgenden anhand der Zeichnung näher erläutert. Es zeigen:
- Figur 1: eine schematische Darstellung einer Parallel-Schalteranordnung gemäß der Erfindung;
- Figur 2: eine schematische Darstellung von zwei Schaltzyklen einer Parallel-Schalteranordnung;
- Figur 3a-d: schematische Darstellungen von Schaltfolgen bei einem Öffnungs- und Schließvorgang eines ersten Schaltzyklus einer Parallel-Schalteranordnung, und
- Figur 4a-d: schematische Darstellungen von Schaltfolgen bei einem Öffnungs- und Schließvorgang eines zweiten Schaltzyklus einer Parallel-Schalteranordnung.

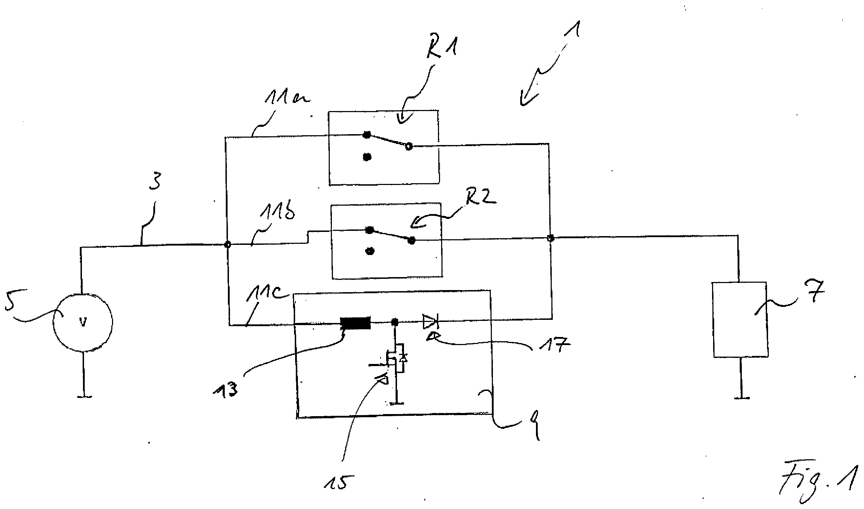

Figur 1 zeigt eine schematische Darstellung einer Parallel-Schalteranordnung 1, die für den Einsatz in einem Start-Stopp-System eines Kraftfahrzeugs geeignet ist. Die Parallel-Schalteranordnung 1 weist beispielhaft zwei parallel geschaltete Schalter R1 und R2 auf, die beispielsweise als Relais ausgebildet sein können. Es versteht sich, dass auch mehr als zwei Schalter parallel geschaltet sein können. Die Schalter R1 und R2 sind in einer Stromversorgungsleitung 3 zwischen einer Energiequelle, insbesondere einer Spannungsquelle 5 und wenigstens einer Last 7 angeordnet. Bei der Spannungsquelle 5 handelt es sich vorzugsweise um eine Autobatterie mit 12 V. Bei der wenigstens einen Last 7 kann es sich beispielsweise um ausgewählte elektrische Systeme, beispielsweise das Audio- und/oder Navigationssystem oder um sonstige Nebenaggregate handeln.

Die Figur 1 zeigt den Einsatz der Parallel-Schalteranordnung 1 rein beispielhaft für ein Start-Stopp-System. Um bei einem Startvorgang einen Einbruch der Bordnetzstabilität zu vermeiden, ist ein DC/DC-Wandler 9 vorgesehen, der vorzugsweise als Aufwärtswandler ausgebildet ist und der parallel zu den Schaltern R1 und R2 geschaltet ist. Die beiden Schalter R1 und R2 sowie der DC/DC-Wandler 9 sind über Leitungen 11a, 11b und 11c mit der gemeinsamen Stromversorgungsleitung 3 verbunden.

Der DC/DC-Wandler 9 gemäß Figur 1 ist wie gesagt vorzugsweise als Aufwärtswandler ausgebildet und weist dementsprechend eine Induktivität 13, einen Schalter 15 und eine Diode 17 auf. Seine Funktionsweise ist hinreichend bekannt und soll daher nicht weiter ausgeführt werden. Es versteht sich, dass der DC/DC-Wandler 9 auch anders ausgebildet sein kann, beispielsweise kann er zusätzlich über einen integrierten Doppelschichtkondensator oder dergleichen verfügen.

Die Funktionsweise der Schaltung gemäß Figur 1 wird im Folgenden näher erläutert:

In einem Normalbetriebszustand N bzw. in einem Bypassbetrieb der Parallel-Schalter-anordnung 1 sind die Schalter R1 und R2, wie in Figur 1 gezeigt, geschlossen, so dass ein Strom von der Spannungsquelle 5, also von der Autobatterie über die Stromversorgungsleitung 3 über die Leitungen 11a und 11b zu der Last 7 gelangt. Soll nun ein Startvorgang eingeleitet werden, beispielsweise weil der Fahrer die Kupplung betätigt, wird ein entsprechendes Signal an eine hier nicht gezeigte Relaissteuerung abgegeben, die das Öffnen der Schalter R1 und R2 bewirkt, so dass ein Stromfluss von der Spannungsquelle 5 über die Stromversorgungsleitung 3, die Leitung 11c über den DC/DC-Wandler zu der Last 7 erfolgt. Der DC/DC-Wandler erhöht daraufhin die Bordnetzspannung, die durch den hohen Leistungsbedarf des Anlassers temporär reduziert ist. Sobald der Stabilisierungsvorgang der Bordnetzspannung durch den DC/DC-Wandler 9 abgeschlossen ist, sendet die Relaissteuerung ein entsprechendes Signal an die Schalter R1 und R2, woraufhin diese wieder geschlossen werden, so dass eine Stromführung wiederum ausschließlich über die Leitungen 11a und 11b erfolgt.

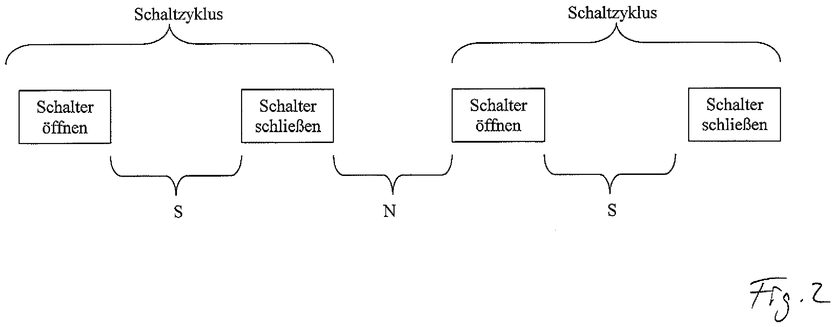

Ein Stabilisierungsvorgang umfasst somit einen Öffnungsvorgang und einen Schließvorgang der Schalter, wobei ein Öffnungsvorgang und ein Schließvorgang wiederum einen Schaltzyklus bilden, wie im Folgenden in der Beschreibung zu Figur 2 näher erläutert wird.

In Figur 2 sind beispielhaft zwei aufeinanderfolgende Schaltzyklen einer Parallel-Schalteranordnung gemäß Figur 1 dargestellt, welche das oben Gesagte verdeutlichen. Der Übergang von einem Betriebszustand in den anderen Betriebszustand, also beispielsweise von einem Normalbetriebszustand N in einen Stabilisierungsbetriebszustand S der Parallel-Schalteranordnung 1 wird jeweils durch ein Öffnen der Schalter R1 und R2 oder durch ein Schließen der Schalter R1 und R2 eingeleitet.

Figur 2 macht deutlich, dass ein Schaltzyklus jeweils zwei Übergänge umfasst, nämlich einen Öffnungsvorgang und einen Schließvorgang der Schalter. In Bezug auf ein Start-Stopp-System beginnt ein Schaltzyklus üblicherweise mit einem Öffnungsvorgang und endet mit einem Schließvorgang der Schalter. Ein Schaltzyklus schließt in diesem Fall also einen Stabilisierungsbetriebszustand S ein, während dem die Schalter R1 und R2 geöffnet sind. Bei anderen Anwendungen kann vorgesehen sein, dass die Schalter zur Einleitung eines Stabilisierungsbetriebszustandes S der Parallel-Schalter-anordnung 1 zunächst geschlossen sind und zur Einleitung des Normalbetriebszustandes N wieder geöffnet werden.

Gemäß der vorliegenden Erfindung weisen die Schalter R1 und R2 bei wenigstens einem Öffnungsvorgang und/oder bei einem Schließvorgang eines Schaltzyklus eine zeitversetzte Schaltfolge auf. Vorzugsweise ist vorgesehen, dass sowohl bei dem Öffnungsvorgang als auch bei dem Schließvorgang eines Schaltzyklus ein zeitversetztes Schalten der Schalter erfolgt. Es kann jedoch auch vorgesehen sein, dass lediglich bei dem Öffnungsvorgang oder bei dem Schließvorgang eines Schaltzyklus eine zeitversetzte Schaltfolge der Schalter vorgesehen ist und die Schalter bei dem jeweils anderen Vorgang zeitgleich geschaltet werden.

Eine zeitversetzte Schaltfolge bedeutet, dass zum Einleiten des Stabilisierungsbetriebszustandes S, also bei einem Öffnungsvorgang der Schalter beispielsweise zunächst der Schalter R1 und zeitversetzt dazu der Schalter R2 geöffnet wird oder umgekehrt. Entsprechend kann beim Beenden des Stabilisierungsbetriebszustandes S der Parallel-Schalteranordnung 1 bzw. zum Einleiten des Normalbetriebszustandes N ein entsprechender Schließvorgang der Schalter derart ausgeführt werden, dass zunächst der Schalter R1 geschlossen wird und anschließend der Schalter R2 oder umgekehrt.

Entscheidend ist, dass sich die Schaltfolge der Schalter R1 und R2 nach ein oder mehreren Schaltzyklen, vorzugsweise jedoch nach jedem Schaltzyklus ändert, insbesondere umkehrt, wobei ein Schaltzyklus genau einen Öffnungs- und einen Schließvorgang umfasst. Es soll an dieser Stelle noch einmal ausdrücklich erwähnt werden, dass die Schalter R1 und R2 während eines Stabilisierungsvorgangs durch den DC/DC-Wandler 9 geöffnet bleiben, während die Schalter R1 und R2 während eines Normalbetriebszustandes der Parallel-Schalteranordnung geschlossen bleiben.

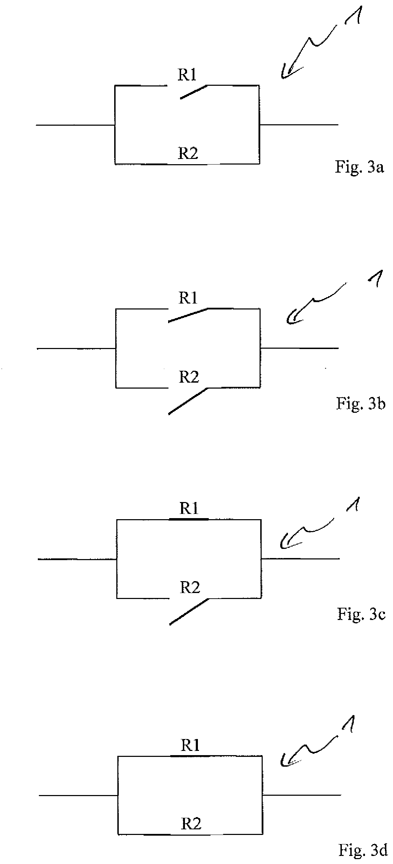

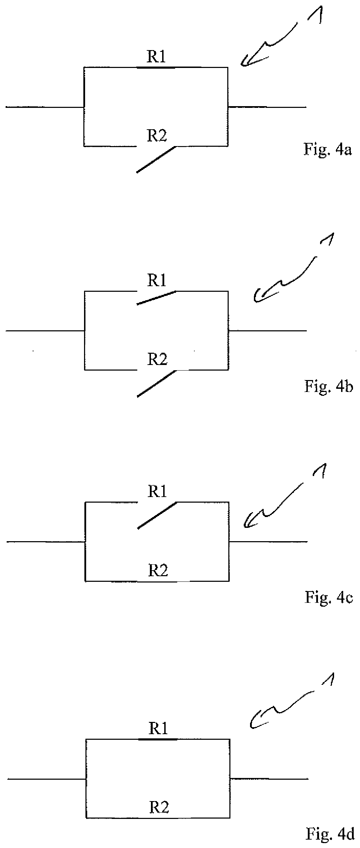

Die Figuren 3a bis 3d und 4a bis 4d zeigen zwei aufeinanderfolgende Schaltzyklen und zeitversetzte Schaltfolgen gemäß der Erfindung, wobei die Figuren 3a bis 3d einen ersten Schaltzyklus und die Figuren 4a bis 4d einen zweiten Schaltzyklus beschreiben. Weiterhin zeigen die Figuren 3a und 3b einen Öffnungsvorgang des ersten Schaltzyklus, insbesondere von einem Normalbetriebszustand N in einen Stabilisierungsbetriebszustand S und die Figuren 3c und 3d zeigen einen Schließvorgang des ersten Schaltzyklus, insbesondere von dem Stabilisierungsbetriebszustand S in den Normalbetriebszustand N. Ferner zeigen die Figuren 4a und 4b einen Öffnungsvorgang des zweiten Schaltzyklus, insbesondere von einem Normalbetriebszustand N in einen Stabilisierungsbetriebszustand S und die Figuren 4c und 4d zeigen einen Schließvorgang des zweiten Schaltzyklus, insbesondere von dem Stabilisierungsbetriebszustand S in den Normalbetriebszustand N.

Die Figuren 3a und 3b zeigen wie gesagt einen Öffnungsvorgang der Schalter R1 und R2 des ersten Schaltzyklus mit einer zeitversetzten Schaltfolge der Schalter R1 und R2, wobei der Öffnungsvorgang dann durchgeführt wird, wenn bei einem reduzierten Laststrom in den Stabilisierungsbetriebszustand S geschaltet werden soll.

Wie Figur 3a zeigt, wird zu einem Zeitpunkt t₁ zunächst der Schalter R1 geöffnet. Der Schalter R2 wird erst zu einem Zeitpunkt t₂ geöffnet, wie in Figur 3b dargestellt ist. Der zu führende Strom wird somit von dem später zu schaltenden Schalter R2 übernommen, während der Schalter R1 praktisch lastlos geschaltet wird. Sobald beide Schalter geöffnet sind, wird der Strom nur noch über den DC/DC-Wandler 9 geführt.

Nach Abschluss des Stabilisierungsvorgangs müssen die Schalter R1 und R2 wieder geschlossen werden, um in den Normalbetriebszustand N der Parallel-Schalter-anordnung 1 zurückzukehren, um den DC/DC-Wandler 9 zu entlasten. Hierzu wird zu einem Zeitpunkt t₃ gemäß Figur 3c wiederum zunächst der Schalter R1 geschlossen, während der Schalter R2 geöffnet bleibt. Erst zu einem späteren Zeitpunkt t₄ wird auch der Schalter R2 geschlossen, wie in Figur 3d dargestellt ist, so dass der Strom über die Schalter R1 und R2 geführt wird.

Bei dem Schließvorgang des ersten Schaltzyklus der Schalter R1 und R2 ist es nicht zwingend notwendig zuerst den Schalter R1 und dann den Schalter R2 zu schließen. Denkbar ist es vielmehr auch, zunächst den Schalter R2 und dann den Schalter R1 zu schließen. Entscheidend ist lediglich, dass sich die Schaltfolge im nachfolgenden Schaltzyklus umkehrt.

Im Folgenden wird anhand der Figuren 4a bis 4d ein nachfolgender zweiter Schaltzyklus mit einer zeitversetzten Schaltfolge des Öffnungsvorgangs und des Schließvorgangs beschrieben.

Im Gegensatz zu Figur 3a wird in Figur 4a nicht zuerst der Schalter R1 geöffnet, sondern zunächst wird der Schalter R2 zu einem Zeitpunkt t₅ geöffnet, während der Schalter R1 noch geschlossen bleibt. Erst zu einem späteren Zeitpunkt t₆ wird auch der Schalter R1 geöffnet, wie in Figur 4b erkennbar ist. Auf diese Weise wird der Schalter R2 nahezu lastlos geschaltet, da der Strom durch den später zu schaltenden Schalter R1 übernommen wird.

Nach dem Stabilisierungsvorgang wird gemäß Figur 4c zunächst der Schalter R2 zu einem Zeitpunkt t₇ geschlossen, während der Schalter R1 noch offen bleibt. Erst zu einem späteren Zeitpunkt t₈ wird auch der Schalter R1 geschlossen, wie in Figur 4d erkennbar ist. Auch bei diesem Schließvorgang des zweiten Schaltzyklus ist es nicht zwingend notwendig, dass zunächst der Schalter R2 betätigt wird. Vielmehr kann auch vorgesehen sein, dass der Schalter R1 zunächst geschlossen wird.

Entscheidend ist, dass die Schalter R1 und R2 bei einem der nachfolgenden Schaltzyklen, vorzugsweise bei dem unmittelbar nachfolgenden Schaltzyklus eine andere Schaltfolge aufweisen. Falls wie in dem vorliegenden Beispiel zwei Schalter vorgesehen sind, wird die Schaltfolge zweckmäßigerweise einfach umgekehrt. Falls jedoch mehr als zwei Schalter parallel geschaltet sind, ist vorzugsweise vorgesehen, dass die Schaltfolge zyklisch vertauscht wird, dass also bei dem ersten Schaltzyklus zuerst R1 geschaltet wird, bei dem zweiten Schaltzyklus R2, bei dem dritten Schaltzyklus R3 usw., so dass jeweils nur einer der Schalter den Strom übernimmt und die anderen Schalter nahezu lastlos geschaltet werden. Wie gesagt, ist vorzugsweise vorgesehen, dass sowohl beim Öffnungs- also auch beim Schließvorgang eines Schaltzyklus eine zeitversetzte Schaltfolge der Schalter vorgesehen ist, wobei die Schaltfolge beim Öffnungs- und beim Schließvorgang eines Schaltzyklus unterschiedlich sein kann. Wesentlich ist, dass die Schaltfolge des Öffnungs- und Schließvorgangs in einem der nachfolgenden Schaltzyklen, vorzugsweise im unmittelbar nachfolgenden Schaltzyklus verändert, insbesondere umgekehrt wird, sofern zwei Schalter vorgesehen sind.

Insgesamt zeigt sich, dass jeder Schalter, insbesondere jedes Relais vorzugsweise bei jedem zweiten Schaltzyklus nahezu lastlos geschaltet wird, da der Strom von dem jeweils später zu schaltenden Schalter übernommen wird. Somit wird die Überbelastung von nur einem der Schalter vermieden, da die Belastung auf beide Schalter aufgeteilt wird.

Weiterhin ermöglicht die hier vorgeschlagene Parallel-Schalteranordnung eine besonders einfache Art der Überprüfung der Funktionsfähigkeit der einzelnen Schalter. Hierzu ist vorzugsweise eine nicht dargestellte Fehlererkennungseinrichtung vorgesehen, welche dazu geeignet ist einen Spannungsabfall an dem DC/DC-Wandler zu messen. Der Spannungsabfall über den DC/DC-Wandler entsteht durch die Diode 17 im ausgeschalteten Zustand des DC/DC-Wandlers.

Vorzugsweise überprüft die Fehlererkennungseinrichtung die Funktionsfähigkeit wenigstens eines Schalters während jedem Schaltzyklus. Es kann jedoch auch vorgesehen sein, dass die Fehlererkennungseinrichtung bei jedem Öffnungs- und Schließvorgang eines Schaltzyklus eine Überprüfung durchführt.

Betrachtet man beispielsweise Figur 3a, so zeigt sich, dass eine Spannung an dem parallel geschalteten DC/DC-Wandler 9 gemäß Figur 1 abfällt, wenn der Schalter R2 bei geöffnetem Schalter R1 defekt ist, also nicht schließt. Dieser Spannungsabfall kann durch die Fehlererkennungseinrichtung gemessen und ausgewertet werden. Nach der Überprüfung kann der Schalter R2 dann geöffnet werden, sofern er funktionsfähig ist. Wird beispielsweise bei dem Schaltzustand nach Figur 3a festgestellt, dass ein Spannungsabfall an dem DC/DC-Wandler 9 entsteht, bedeutet dies, dass der Schalter R2 entgegen seiner Bestimmung geöffnet und damit defekt ist.

Auch in den Schaltzuständen gemäß den Figuren 3c, 4a und 4c kann eine Fehlererkennung, d.h. eine Überprüfung der Schalter durchgeführt werden. In Figur 3c kann eine Überprüfung des Schalters R1 durchgeführt werden, in Figur 4a ebenfalls eine Überprüfung des Schalters R1 und in Figur 4c eine Überprüfung des Schalters 4d. Durch das zeitversetzte Schalten der Schalter R1 und R2 ist bei jedem Öffnungs- und/oder Schließvorgang ein Schalter geschlossen während der andere geöffnet ist. Dies ermöglicht in vorteilhafter Weise eine Überprüfung desjenigen Schalters, der geschlossen sein sollte. Durch die Änderung der Schaltfolge, vorzugsweise nach jedem Schaltzyklus, kann in vorteilhafter Weise in jedem Schaltzyklus ein anderer Schalter überprüft werden. Für den Fall, dass wie im vorliegenden Beispiel zwei Schalter vorgesehen sind, kann sogar jeder der beiden Schalter R1 und R2 innerhalb eines Schaltzyklus überprüft werden, wobei ein Schalter während des Öffnungsvorgangs und der andere Schalter während des Schließvorgangs überprüft wird.

Meldet die Fehlererkennungseinrichtung nun einen Fehler, insbesondere einen nicht schließenden Schalter, so wird der funktionsfähige Schalter weiterhin einen reduzierten Strom führen. Dadurch wird sicher gestellt, dass ein einfacher Bauteilausfall, also ein Ausfall eines Schalters bzw. eines Relais nicht dazu führt, dass der DC/DC-Wandler 9 mit einem Dauerstrom überlastet wird. Hierdurch wird auch eine durch die Überbelastung entstehende Brandgefahr beseitigt.

### Bezugszeichenliste

- 1: Parallel-Schalteranordnung
- 3: Stromversorgungsleitung
- 5: Spannungsquelle
- 7: Last
- 9: DC/DC-Wandler
- 11a-c: Leitungen
- 13: Induktivität
- 15: Schalter
- 17: Diode

## Patentansprüche

1. Parallel-Schalteranordnung (1) zur Verwendung mit einem Start-Stopp-System eines Kraftfahrzeugs, mit mindestens zwei parallel geschalteten Relais (R1, R2), die in einer Stromversorgungsleitung (3) zwischen einer Energiequelle (5) und wenigstens einer Last (7) angeordnet sind, wobei die Parallel-Schalteranordnung (1) abwechselnd einen Stabilisierungsbetriebszustand (S) und einen Normalbetriebszustand (N) aufweist, in denen die Schaltzustände der Relais (R1, R2) entgegengesetzt sind, wobei im Stabilisierungsbetriebszustand (S) die Relais (R1, R2) geöffnet sind, während im Normalbetriebszustand (N) die Relais (R1, R2) geschlossen sind, **dadurch gekennzeichnet, dass** die Relais (R1, R2) bei einem Öffnungsvorgang und/oder bei einem Schließvorgang eines Schaltzyklus eine zeitversetzte Schaltfolge aufweisen und sich die Schaltfolge der Relais (R1, R2) nach ein oder mehreren Schaltzyklen ändert.

2. Parallel-Schalteranordnung nach Anspruch 1, **dadurch gekennzeichnet, dass** sich die Schaltfolge nach jedem Schaltzyklus ändert.

3. Parallel-Schalteranordnung nach einem der vorhergehenden Ansprüche, **dadurch gekennzeichnet, dass** ein DC/DC-Wandler (9), insbesondere ein Aufwärtswandler parallel zu den mindestens zwei Relais (R1, R2) geschaltet ist.

4. Parallel-Schalteranordnung nach einem der vorhergehenden Ansprüche, **dadurch gekennzeichnet, dass** die Relais (R1, R2) in dem Normalbetriebszustand (N) geschlossen und in dem Stabilisierungsbetriebszustand (S) der Parallel-Schalteranordnung (1) geöffnet sind.

5. Parallel-Schalteranordnung nach einem der vorhergehenden Ansprüche, **dadurch gekennzeichnet, dass** eine Fehlererkennungseinrichtung vorgesehen ist, die vorzugsweise während jedem Schaltzyklus die Funktionsfähigkeit wenigstens eines Relais (R1, R2) überprüft.

6. Verfahren zum Schalten einer Parallel-Schalteranordnung (1), mit mindestens zwei parallel geschalteten Relais (R1, R2), die in einer Stromversorgungsleitung (3) zwischen einer Energiequelle (5) und wenigstens einer Last (7) angeordnet sind, wobei die Parallel-Schalteranordnung (1) abwechselnd einen Stabilisierungsbetriebszustand (S) und einen Normalbetriebszustand (N) aufweist, in denen die Schaltzustände der Relais (R1, R2) entgegengesetzt sind, wobei im Stabilisierungsbetriebszustand (S) die Relais (R1, R2) geöffnet sind, während im Normalbetriebszustand (N) die Relais (R1, R2) geschlossen sind, **dadurch gekennzeichnet, dass** die Relais (R1, R2) bei einem Öffnungsvorgang und/oder bei einem Schließvorgang eines Schaltzyklus zeitversetzt geschaltet werden und die Schaltfolge der Relais (R1, R2) nach ein oder mehreren Schaltzyklen verändert wird.

7. Verfahren nach Anspruch 6, **dadurch gekennzeichnet, dass** die Schaltfolge nach jedem Schaltzyklus verändert wird.

8. Verfahren nach Anspruch 6 oder 7, **dadurch gekennzeichnet, dass** während einem Öffnungs- und/oder Schließvorgang eines Schaltzyklus die Funktionsfähigkeit wenigstens eines Relais (R1, R2) durch eine Fehlererkennungseinrichtung überprüft wird.

9. Verfahren nach Anspruch 8, **dadurch gekennzeichnet, dass** eine Überprüfung durch die Fehlererkennungseinrichtung durchgeführt wird, während einer der Relais (R1, R2) geschlossen ist.

10. Verfahren nach einem der vorhergehenden Ansprüche 6 bis 9, **dadurch gekennzeichnet, dass** in dem Stabilisierungsbetriebszustand der Parallel-Schalteranordnung (1) eine Stromführung ausschließlich über einen DC/DC-Wandler (9), insbesondere über einen Aufwärtswandler erfolgt, der zu den Relais (R1, R2) parallel geschaltet ist.

11. Verfahren nach Anspruch 10, **dadurch gekennzeichnet, dass** die Fehlererkennungseinrichtung einen Spannungsabfall an dem DC/DC-Wandler (9) misst.

## Claims

1. A parallel switch assembly (1) for use with a start-stop system of a motor vehicle comprising at least two parallel-connected relays (R1, R2) arranged in a power supply line (3) between an energy source (5) and at least one load (7), wherein the parallel switch assembly (1) alternatingly exhibits a stabilizing operating mode (S) and a normal operating mode (N) in which the switching states of the relays (R1, R2) are opposite, wherein the relays (R1, R2) are open in the stabilizing operating mode (S) whereas the relays (R1, R2) are closed in the normal operating mode (N), **characterized in that** the relays (R1, R2) exhibit a delayed switching sequence in an opening operation and/or in a closing operation of a switching cycle and the switching sequence of the relays (R1, R2) changes after one or more switching cycles.

2. The parallel switch assembly according to claim 1, **characterized in that** the switching sequence changes after each switching cycle.

3. The parallel switch assembly according to one of the preceding claims, **characterized in that** a DC/DC-converter (9), in particular a boost converter, is connected in parallel to the at least two relays (R1, R2).

4. The parallel switch assembly according to one of the preceding claims, **characterized in that** the relays (R1, R2) are closed in the normal operating mode (N) and open in the stabilizing operating mode (S) of the parallel switch assembly (1).

5. The parallel switch assembly according to one of the preceding claims, **characterized in that** an error detection device is provided which preferably checks the operability of at least one relay (R1, R2) during each switching cycle.

6. A method for switching a parallel switch assembly (1) comprising at least two parallel-connected relays (R1, R2) arranged in a power supply line (3) between an energy source (5) and at least one load (7), wherein the parallel switch assembly (1) alternatingly exhibits a stabilizing operating mode (S) and a normal operating mode (N) in which the switching states of the relays (R1, R2) are opposite, wherein the relays (R1, R2) are open in the stabilizing operating mode (S) whereas the relays (R1, R2) are closed in the normal operating mode (N), **characterized in that** the relays (R1, R2) are switched at a time delay in an opening operation and/or in a closing operation of a switching cycle and the switching sequence of the relays (R1, R2) is changed after one or more switching cycles.

7. The method according to claim 6, **characterized in that** the switching sequence changes after each switching cycle.

8. The method according to claim 6 or 7, **characterized in that** an error detection device checks the operability of at least one relay (R1, R2) during an opening and/or closing operation of a switching cycle.

9. The method according to claim 8, **characterized in that** the error detection device check occurs while one of the relays (R1, R2) is closed.

10. The method according to one of preceding claims 6 to 9, **characterized in that** in the stabilizing operating mode of the parallel switch arrangement (1), current is supplied exclusively by a DC/DC-converter (9), in particular via a boost converter, which is connected in parallel to the relays (R1, R2).

11. The method according to claim 10, **characterized in that** the error detection device measures a voltage drop at the DC/DC-converter (9).

## Revendications

1. Agencement de commutateurs parallèles (1) à utiliser avec un système dit "start/stop" d'un véhicule automobile, comprenant au moins deux relais branchés en parallèle (R1, R2), qui sont agencés dans une ligne d'alimentation électrique (3) entre une source d'énergie (5) et au moins une charge (7), ledit agencement de commutateurs parallèles (1) présente alternativement un état de fonctionnement de stabilisation (S) et un état de fonctionnement normal (N), dans lesquels les états de commutation des relais (R1, R2) sont mutuellement opposés, et dans l'état de fonctionnement de stabilisation (S) les relais (R1, R2) sont ouverts, tandis que dans l'état de fonctionnement normal (N) les relais (R1, R2) sont fermés,
**caractérisé en ce que**, lors d'une opération d'ouverture et/ou lors d'une opération de fermeture d'un cycle de commutation, les relais (R1, R2) présentent une succession de commutation en décalage temporel, et la succession de commutation des relais (R1, R2) est modifiée après un ou plusieurs cycles de commutation.

2. Agencement de commutateurs parallèles selon la revendication, 1,
**caractérisé en ce que** la succession de commutation est modifiée après chaque cycle de commutation.

3. Agencement de commutateurs parallèles selon l'une des revendications précédentes,
**caractérisé en ce qu'**un convertisseur continu/continu (9), en particulier un convertisseur montant, est branché en parallèle audit au moins deux relais (R1, R2).

4. Agencement de commutateurs parallèles selon l'une des revendications précédentes,
**caractérisé en ce que** dans l'état de fonctionnement normal (N) les relais (R1, R2) de l'agencement de commutateurs parallèles (1) sont fermés et dans l'état de fonctionnement de stabilisation (S) les relais (R1, R2) de l'agencement de commutateurs parallèles (1) sont ouverts.

5. Agencement de commutateurs parallèles selon l'une des revendications précédentes,
**caractérisé en ce qu'**il est prévu un système de reconnaissance d'erreur qui vérifie la capacité de fonctionnement d'au moins un relais (R1, R2), de préférence pendant chaque cycle de commutation.

6. Procédé pour commuter un agencement de commutateurs parallèles (1), avec au moins deux relais branchés en parallèle (R1, R2), qui sont agencés dans une ligne d'alimentation électrique (3) entre une source d'énergie (5) et au moins une charge (7), dans lequel l'agencement de commutateurs parallèles (1) présente alternativement un état de fonctionnement de stabilisation (S) et un état de fonctionnement normal (N), dans lesquels les états de commutation des relais (R1, R2) sont mutuellement opposés, et dans l'état de fonctionnement de stabilisation (S) les relais (R1, R2) sont ouverts, alors que dans l'état de fonctionnement normal (N) les relais (R1, R2) sont fermés,
**caractérisé en ce que**, lors d'une opération d'ouverture et/ou lors d'une opération de fermeture d'un cycle de commutation, les relais (R1, R2) sont commutés en décalage temporel et la succession de commutation des relais (R1, R2) est modifiée après un ou plusieurs cycles de commutation.

7. Procédé selon la revendication 6,
**caractérisé en ce que** la succession de commutation est modifiée après chaque cycle de commutation.

8. Procédé selon la revendication 6 ou 7,
**caractérisé en ce que** la capacité de fonctionnement d'au moins un relais (R1, R2) est vérifiée par un système de reconnaissance d'erreur pendant une opération d'ouverture et/ou une opération de fermeture d'un cycle de commutation.

9. Procédé selon la revendication 8,
**caractérisé en ce qu'**une vérification est effectuée par le système de reconnaissance d'erreur pendant que l'un des relais (R1, R2) est fermé.

10. Procédé selon l'une des revendications précédentes 6 à 9,
**caractérisé en ce que** dans l'état de fonctionnement de stabilisation de l'agencement de commutateurs parallèles (1) un passage du courant électrique a lieu exclusivement via un convertisseur continu/continu (9), en particulier via un convertisseur montant, qui est branché en parallèle au relais (R1, R2).

11. Procédé selon la revendication 10,
**caractérisé en ce que** le système de reconnaissance d'erreur mesure une chute de tension au niveau du convertisseur continu/continu (9).
